Europäisches Patentamt

European Patent Office

Office européen des brevets

(11) Veröffentlichungsnummer: **0 456 110 A2**

# (12) EUROPÄISCHE PATENTANMELDUNG

(21) Anmeldenummer: **91107078.7**

(22) Anmeldetag: **02.05.91**

(51) Int. Cl.⁵: **G02B 26/10**, G02B 13/08

(30) Priorität: **09.05.90 DE 4014837**

(43) Veröffentlichungstag der Anmeldung:
**13.11.91 Patentblatt 91/46**

(84) Benannte Vertragsstaaten:
**CH DE FR GB IT LI**

(71) Anmelder: **Firma Carl Zeiss**

**W-7920 Heidenheim (Brenz)(DE)**
(84) **CH DE FR IT LI**

Anmelder: **CARL ZEISS-STIFTUNG HANDELND ALS CARL ZEISS**

**W-7920 Heidenheim (Brenz)(DE)**
(84) **GB**

(72) Erfinder: **Scherle, Winfried, Dr.**
**Kopernikusstrasse 95**
**W-7082 Oberkochen(DE)**

(54) **Verfahren und Vorrichtungen zum punktweisen optischen Überstreichen einer Vorlage.**

(57) Während es bei Scannern mit Polygonspiegeln und ebener Bildebene kein Problem ist, eine gewünschte Strahlgeometrie zu erzeugen, ist dies bei Scannern mit zylinderförmiger Bildebene ein bisher ungelöstes Problem. Die Erfindung stellt Verfahren und Vorrichtungen vor, auch hier dieses Problem zu lösen.

Es wird ein orientierter, vorzugsweise elliptischer Spot auf der Bildebene erzeugt. Dabei ist vorteilhafterweise die große Halbachse des elliptischen Spots quer zur Scanrichtung orientiert. Die Strahlformung erfolgt entweder durch
- eine asphärische Spiegelfläche,
- eine auf oder direkt vor einer Spiegelfläche angebrachte asphärische Optik, oder durch
- einen um eine Spiegelfläche angebrachten rotationssymmetrischen, asphärischen Linsenkörper.

Fig.2

EP 0 456 110 A2

Die Erfindung betrifft ein Verfahren zum punktweisen optischen Überstreichen einer Vorlage auf einer innerzylindrischen Bildebene mit einem durch eine Umlenkvorrichtung abgelenkten Strahlenbündel sowie Vorrichtungen zur Durchführung des Verfahrens.

Zum Belichten eines Films oder zum Abtasten eines Bildes, beides in dieser Schrift zukünftig Scannen genannt, muß ein Strahlenbündel über einen Film oder ein Bild, beides in dieser Schrift zukünftig Vorlage genannt, bewegt werden. Dazu benötigt man eine bewegbare Umlenkvorrichtung, welche ein vorgeformtes Strahlenbündel über die Vorlage in der Bildebene bewegt. Prinzipiell kann man Scanner mit einer ebenen Bildebene (z.B. Flachbett-Scanner) und Scanner mit einer zylindrischen Bildebene (Trommelscanner) unterscheiden.

Diese Schrift betrifft nur Trommelscanner mit innerzylindrischer Bildebene.

Aus der DE-PS 37 42 510 ist ein Scanner bekannt, bei welchem die Umlenkvorrichtung aus einem holographischen Gitter besteht. Ein derartiges Gitter ist sehr schwierig exakt herzustellen und dementsprechend teuer. Außerdem kann man mit dieser Umlenkvorrichtung lediglich einen runden Spot auf eine gewölbte Bildebene um die sich in der optischen Strahleneinfallsachse drehende Umlenkvorrichtung erzeugen.

Aus der DE-PS 33 27 215 ist eine Vorrichtung zur Ablenkung eines axial einfallenden Lichtstrahles auf eine sich um eine drehende Umlenkvorrichtung befindliche Bildebene bekannt. Ein axial verschiebliches ringförmiges lichtbrechendes Element um einen Umlenkspiegel herum dient zur Ablenkung des Lichtstrahles aus axialer Richtung auf die Bildebene, wobei dieses lichtbrechende Element räumlich vom Umlenkspiegel getrennt ist und sich nicht mitdreht. Welche Spotform für das Scannen sinnvoll ist, wird in dieser Schrift nicht offenbart.

Aus der DE-PS 36 01 442 und dem gleichlautenden DE-Gbm 86 01 209 ist eine Umlenkvorrichtung bekannt, bei welcher zur Reduzierung der Unwucht auf einen schräg ausgerichteten planen Drehspiegel ein Prisma aufgesetzt ist. Es sind in beiden Schriften keine darüberhinausgehenden Merkmale zur Ausgestaltung der als Umlenkoptik bezeichnenden Umlenkvorrichtung angegeben und es finden sich auch keine Äußerungen über eine vorteilhafte Spotform.

Aus der US-PS 41 31 916 ist ein Scanner mit einer Umlenkvorrichtung bekannt, bei welcher auf der Strahlerzeugerseite eines Spiegels eine sich mit dem Spiegel mitdrehende Linse angebracht ist. Diese Linse dient lediglich dazu, das einfallende Strahlenbündel auf eine zylinderförmige Bildebene um die Umlenkvorrichtung zu fokussieren.

Allen bekannten Scanverfahren haftet der Mangel an, daß aufgrund der kreisförmigen Spotform und der endlichen Belichtungszeit auf der Bildebene in den beiden Abtastrichtungen unterschiedliche Auflösungen vorhanden sind.

Es ist die Aufgabe der Erfindung ein Verfahren zu entwickeln, welches es ermöglicht, bei einem Scanvorgang möglichst scharf begrenzte und quadratische Spots zu erzeugen und damit eine gleich große Auflösung in den beiden Abtastrichtungen zu ermöglichen sowie eine Vorrichtung zu schaffen, mit welcher das Verfahren durchgeführt werden kann.

Diese Aufgabe wird durch ein Verfahren nach dem kennzeichnenden Teil des Anspruchs 1 und durch eine Vorrichtung nach dem kennzeichnenden Teil des Anspruchs 4 gelöst.

Die Erzeugung eines orientierten Spots auf einer Vorlage auf einer innerzylindrischen Bildebene ist die Voraussetzung für ein optimales Überstreichen einer dort angebrachten Vorlage. Dazu eignen sich vorzugsweise elliptische Spots.

Zur Ablenkung eines ankommenden Strahlenbündels in Richtung auf die Bildebene wird eine Umlenkvorrichtung benötigt. Durch die Drehung dieser Umlenkvorrichtung erreicht man ein optisches Überstreichen entlang einer Linie auf der Bildebene. In der dazu senkrechten Richtung erfolgt die Bewegung bei einem Trommelscanner entweder durch eine Bewegung der Vorlage oder einer Verschiebung der Umlenkvorrichtung entlang der optischen Achse. Nur indem sich die Optik zur Erzeugung der Spotform auf der sich drehenden Umlenkvorrichtung befindet oder rotationssymmetrisch um die Umlenkvorrichtung angeordnet ist, bleibt die Spotform immer konstant und man erhält einen einfachen konstruktiven Aufbau.

Da das Strahlenbündel immer während einer gewissen Aktivzeit einen Spot in der Bildebene erzeugt, ist es vorteilhaft, den Spot in Scanrichtung zu stauchen. Ein gut quadratig ausgeleuchtetes Feldprofil erreicht man, wenn der Betrag der Differenz der großen zur kleinen Achse des elliptischen Spots der Geschwindigkeit des Spots auf der Bildebene multipliziert mit der Aktivzeit entspricht.

Man kann einen orientierten elliptischen Spot auf einer zylinderförmigen Bildebene eines Trommelscanners erzeugen, indem man die Strahlgeometrie des einfallenden Strahlenbündels verändert

a) durch eine sich in der Umlenkvorrichtung befindliche und damit mitdrehende optische Anordnung, welche dadurch mit der Umdrehungsgeschwindigkeit des Umlenkelementes synchronisiert ist;

b) durch eine asphärische Spiegelfläche als Umlenkvorrichtung;

c) durch eine asphärische Optik auf einer Spiegelfläche;

d) durch einen um einen Drehspiegel angebrachten rotationssymmetrischen, asphärischen Linsenkörper.

In den nun folgenden Figuren wird die Erfindung anhand von mehreren Ausführungsbeispielen näher erläutert, wobei dem besseren Verständnis dienende Erläuterungen und Ausgestaltungsmöglichkeiten der Erfindung beschrieben sind.

Es zeigen

Fig. 1 die schematische Darstellung eines Trommelscanners;

Fig. 2 eine Detail-Skizze eines elliptischen Spots;

Fig. 3 eine Umlenkvorrichtung mit asphärischer Spiegeloberfläche auf einem transparenten Aufsatz im seitlichen Schnitt ;

Fig. 3a eine Vorderansicht von Fig. 3;

Fig. 4 eine Umlenkvorrichtung mit planer Spiegeloberfläche und transparentem Aufsatz mit einer optisch wirksamen Außenfläche im seitlichen Schnitt;

Fig. 4a eine Vorderansicht von Fig. 4;

Fig. 5 eine Umlenkvorrichtung mit planer Spiegeloberfläche und transparentem Aufsatz mit zwei optisch wirksamen Außenflächen im seitlichen Schnitt;

Fig. 5a eine Vorderansicht von Fig. 5;

Fig. 6 eine Umlenkvorrichtung gemäß Fig. 5 mit linsenförmigem Aufsatz auf der Strahlenaustrittsfläche im seitlichen Schnitt;

Fig. 6a eine Vorderansicht von Fig. 6;

Fig. 7 eine Umlenkvorrichtung gemäß Fig. 5 mit eingekittetem Zwischenstück im seitlichen Schnitt;

Fig. 7a eine Vorderansicht von Fig. 7;

Fig. 8 eine Umlenkvorrichtung mit einem um diesen angeordneten Linsenring im seitlichen Schnitt;

Fig. 8a eine Vorderansicht von Fig. 8;

Fig. 9 einen aufgefalteten Strahlengang einer Umlenkvorrichtung gemäß Fig. 5;

Fig. 9a ein Spot auf der Bildebene in Aufsicht;

Fig. 9b ein Strahlenbündel im Bereich der Bildebene, seitlich gesehen.

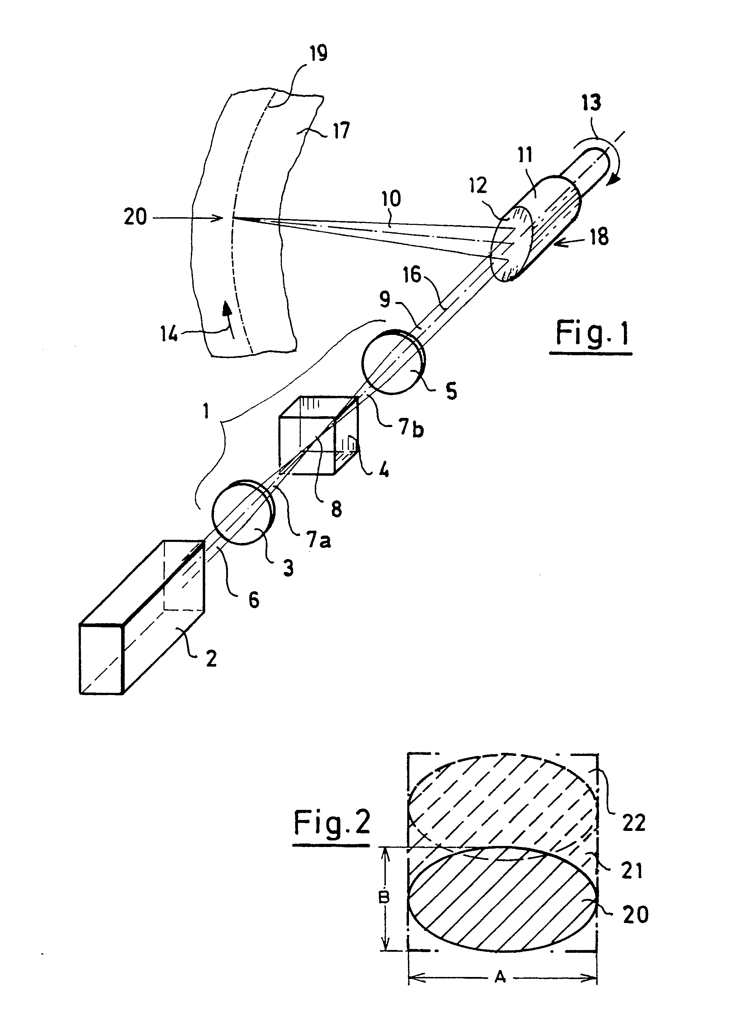

Der in Fig. 1 schematisch dargestellte Trommelscanner hat einen Laser (2) als Lichtquelle. Das von ihm erzeugte Strahlenbündel (6) wird durch eine erste Optik (3), hier schematisiert durch eine einzelne Linse dargestellt, fokussiert. Im Fokus (8) des Strahlenbündels (7a) ist ein AOM (4) (acoustic wave optical modulator) angeordnet, mit welchem gezielt eine Intensitätsveränderung erfolgt. Das aus dem AOM (4) austretende Strahlenbündel (7b) wird durch eine weitere Optik (5), hier schematisiert durch eine einzelne Linse dargestellt, in ein achsenparalleles Strahlenbündel (9) umgewandelt. Die beiden Optiken (3, 5) und der AOM (4) werden unter dem Begriff Strahlerzeugungsoptik (1) zusammengefaßt.

Die Strahlerzeugungsoptik (1) hinter dem Laser (2) liefert ein Strahlenbündel (9) mit einem parallelen Strahlengang um die optische Achse (16). In dieser optischen Achse (16) dreht sich ein Trägerteil (11), welches im wesentlichen ein massiver, schräg abgeschnittener Kreiszylinder ist. Die schräg abgeschnittene Kreiszylinderfläche dient als Spiegelfläche (12). Das Trägerteil (11) mit Spiegelfläche (12) wird Umlenkelement (18) oder auch Drehspiegel genannt. Das rotationssymmetrische Strahlenbündel (9) trifft auf die verspiegelte Oberfläche (12) dieses Trägerteils (11) und wird von der Spiegelfläche (12) in Richtung auf die innerzylindrische Bildebene (17) umgelenkt. Durch die Drehung des Umlenkelementes (18) bewegt sich das durch die nicht rotationssymmetrische, asphärische Spiegeloberfläche (12) im Strahlquerschnitt veränderte Strahlenbündel (10) auf der um die Drehachse gewölbten Bildebene (17) in Pfeilrichtung (14) entlang einer Scanlinie (19).

Wenn der Spot (20) auf der Bildebene (17) eine elliptische Gestalt mit Hauptachsen in Scanrichtung haben soll, muß die Spiegeloberfläche im allgemeinen asphärisch gestaltet sein.

Da das einfallende Strahlenbündel (9) einen rotationssymmetrischen Querschnitt um die optische Achse (16) hat und die Orientierung der nicht rotationssymmetrischen asphärischen Spiegeloberfläche (12) relativ zum Spot (20) bei der Drehung um die Drehachse (13) erhalten bleibt, hat der Spot (20) relativ zur Scanlinie (19) eine feste Orientierung. Wenn das Strahlenbündel (9) achsparallel ist, kann das Umlenkelement (18) außerdem problemlos entlang der Drehachse (13) bzw. optischen Achse (16) bewegt werden, ohne daß sich die Größe des Spots (20) verändert. Ohne daß weitere optische Elemente vorhanden sein müssen, wird so ein orientierter Spot erzeugt, welcher bei entsprechender Wahl der asphärischen Parameter eine elliptische Form hat. Die Parameter werden vorteilhafterweise so gewählt, daß das einfallende Strahlenbündel (9) in einem Schnitt auf die Bildebene (17) fokussiert wird.

Um die Scanlinie (19) auf die Bildebene (17) zu verschieben, kann man auch anstelle des Umlenkelementes (18) die Bildebene (17) entlang der optischen Achse (16) bewegen. Dann braucht das einfallende Strahlenbündel (9) nicht mehr achsparallel zur optischen Achse (16) verlaufen.

In Fig. 2 ist der elliptische Spot (20) aus Fig. 1 dargestellt, welcher auf der Bildebene (17) durch den in Fig. 1 schematisch dargestellten Scanner orientiert erzeugt wird. Durch eine Variation der Radien der asphärischen Spiegeloberfläche (12) kann der Spot in seiner Größe festgelegt werden.

Der Spot (20) ist auf der Bildebene (17) in vorteilhafter Weise quer zur Scanrichtung (14) orientiert. Wenn sich bei dem Scanvorgang das Umlenkelement (18) dreht, bewegt sich der Spot (20) auf der Bildebene (17) in Scanrichtung (14) entlang der Scanlinie (19). Da während der Drehung die Datenaufnahme von einer Vorlage oder die Belichtung eines Filmes erfolgt, ist die Aktivzeit (z.B. Belichtungszeit) des Spots (20) zeitlich begrenzt. Während der Aktivzeit bewegt sich der Spot (20) auf der Bildebene (17) und damit auf der Scanlinie (19). In dem in Fig. 2 dargestellten Beispielsfall beträgt der Betrag des Verhältnisses der großen zur kleinen Achse der Spotellipse: A : B = 2. Um nun eine Belichtung in einem angenähert quadratischen Feld (22) zu erreichen, muß dieser Betrag mit dem Produkt aus Spotgeschwindigkeit auf der Bildebene (17) und Scanaktivzeit (z.B. Belichtungszeit) übereinstimmen. Die Annäherung an das quadratische Feld in der Bildebene (17) gelingt um so genauer, je größer der Betrag des Verhältnisses der großen zur kleinen Achse der Spotellipse ist. Allerdings macht dies eine größere Aktivzeit notwendig, was dem Betrag des Verhältnisses der beiden Ellipsenachsen in der Praxis Grenzen setzt. Das während der Aktivzeit überstrichene Feld (21) durch den Spot (20) wird durch die Intensitätsverteilung des Strahlenbündels (Grauprofil) bestimmt.

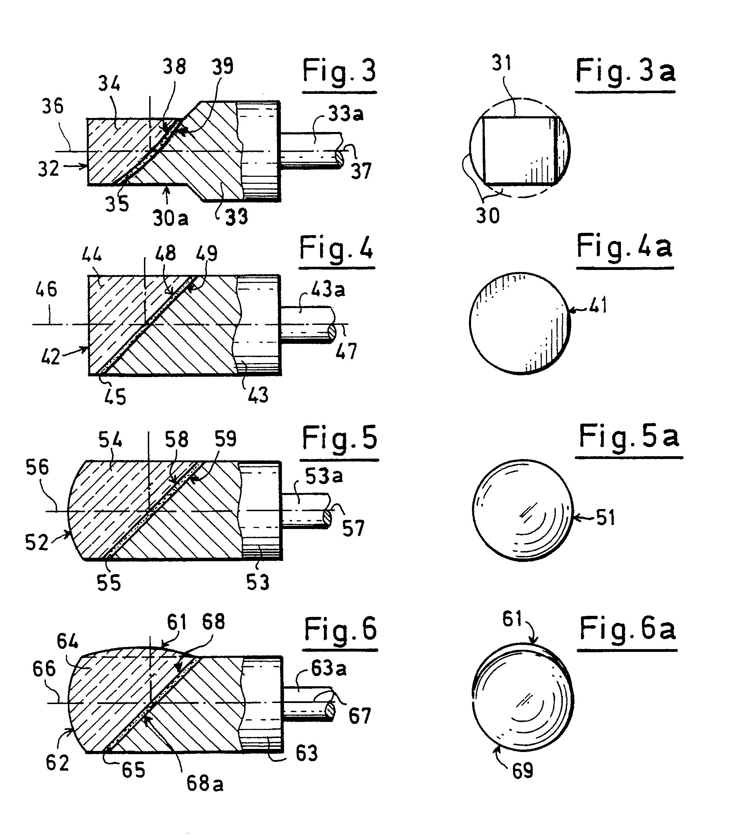

Durch die Integration der Optik zur Erzeugung des elliptischen Spots (20) in das Umlenkelement vereinfacht sich der Aufbau des Scanners erheblich. Wie diese Integration auch auf andere Art und Weise erfolgen kann, ist in den nachfolgenden Figuren 3 - 8 beschrieben. Dabei bleiben alle weiteren Teile des in Fig. 1 dargestellten Scanners erhalten, lediglich das Umlenkelement bzw. die Umlenkvorrichtung wird jeweils modifiziert.

Bei der in Fig. 3 und 3a dargestellten Umlenkvorrichtung ist eine asphärische Spiegeloberfläche (38) auf der Rückseite eines für die verwendete Wellenlänge transparenten Aufsatzes (34) realisiert. Der Aufsatz (34) ist mit einer Klebeschicht (35) auf der Vorderfläche (39) eines Trägerteils (33) befestigt, wobei das Trägerteil (33) ein schräg abgeschnittener Kreiszylinder ist. Die Vorderfläche (39) dieses Kreiszylinders ist der Form der verspiegelten Rückfläche (38) des transparenten Aufsatzes (34) angeglichen, damit die Schwankungen der Klebeschichtdicke nicht zu groß werden. Die Anbringung der asphärischen Spiegeloberfläche (38) auf der Rückfläche des Aufsatzes (34) hat den Vorteil, daß eine sonst notwendige Kittschicht unterschiedlicher Dicke anstelle der Klebeschicht (35) bei Anbringung der Spiegeloberfläche auf der Vorderfläche (39) des Trägerteils (33) keinen negativen Einfluß auf die optischen Abbildungseigenschaften der Umlenkvorrichtung hat und eine doppelte, präzise asphärische Bearbeitung unterbleiben kann.

Die Strahleneintrittsfläche (32) und die Strahlenaustrittsfläche (31) des transparenten Aufsatzes (34) sind plan und üben auf das von der Strahlerzeugungsoptik (1 in Fig. 1) kommende Strahlenbündel keine optische Wirkung aus. Die optische Wirkung erfolgt nur durch die asphärische, verspiegelte Rückfläche (38) des Aufsatzes (34), welche sowohl für eine Ablenkung von der optischen Achse (36) um einen vorherbestimmten Winkel (vorzugsweise 90°) sorgt als auch für die Veränderung der Strahlgeometrie des einfallenden, achsenparallelen Strahlenbündels in ein Strahlenbündel mit elliptischer Strahlgeometrie. Damit die Umlenkvorrichtung eine möglichst geringe Unwucht besitzt (dies ist für die Lebensdauer der Drehlager sowie für die maximal mögliche Umdrehungsgeschwindigkeit wichtig), sind die optisch ungenutzten Teile (30) des Aufsatzes (34) sowie die in diesem Bereich vorhandenen Teile (30a) des Trägerteils (33) entfernt. An seinem Ende besitzt das Trägerteil (33) eine verjüngte Antriebsachse (33a). Bei der Auswahl der Werkstoffe für das Trägerteil (33) und den Aufsatz (34) ist es für die Minimierung des Unwuchtproblems entscheidend, daß das Trägerteil (33) und der Aufsatz (34) annähernd das gleiche spezifische Gewicht haben. Damit das von der Strahlerzeugungsoptik kommende Strahlenbündel immer auf denselben Bereich der verspiegelten, asphärischen Rückfläche (38) des Aufsatzes (34) fällt, ist es sehr wichtig, daß sich die Drehachse (37) der Umlenkvorrichtung genau in der Verlängerung der optischen Achse (36) der Strahlerzeugungsoptik befindet.

Zur besseren Verdeutlichung der Verhältnisse ist die Klebeschicht (35) in der Fig. 3 sowie in den nachfolgenden Fig. 4 - 7 überdimensioniert gezeichnet.

Im Gegensatz zu der in Fig. 3 und 3a sowie in Fig. 1 beschriebenen und dargestellten Umlenkvorrichtung benötigt man bei der in Fig. 4 und 4a dargestellten Umlenkvorrichtung keine schwierig herzustellende asphärische Oberfläche auf der Vorderfläche des Trägerteils oder auf der Rückseite des Aufsatzes. Das führt zu einer wesentlichen Verringerung des Fertigungsaufwandes und wenn man einen Aufsatz verwendet, zu einer wesentlichen Verringerung des Justieraufwandes.

Indem man sowohl den transparenten Aufsatz (44) als auch das Trägerteil (43), wie in Fig. 4 und 4a dargestellt, als schräg abgeschnittene Kreiszylinder mit gleichem Durchmesser herstellt, bekommt man eine plane Rückfläche (48) für den Aufsatz (44) und eine plane Vorderfläche (49) auf dem Trägerteil (43). Nachdem man nun die Rückfläche (48) des Aufsatzes (44) verspiegelt hat, kann man durch eine Klebeschicht (45) die Rückfläche (48) des Aufsatzes (44) fest mit der Vorderfläche (49) des Trägerteils (43) verbinden. Danach sind die Mittelsenkrechten der Kreiszylinderschnitte von Aufsatz (44) und Trägerteil (43) in einer Linie, welche während der Benutzung der Umlenkvorrichtung im Scanner sowohl mit der optischen Achse (46) als auch mit der Drehachse (47) übereinstimmen. Nachdem der Aufsatz (44) und das Trägerteil (43) zusammengefügt sind, weisen sie eine gemeinsame, glatte Außenfläche auf. Dies führt zu einer sehr großen Verringerung der Unwucht aber nur dann, wenn das spezifische Gewicht von Aufsatz (44) und Trägerteil (43) möglichst gut übereinstimmt.

Bei der Umlenkvorrichtung mit Aufsatz (44) und Trägerteil (43) dringt das achsparallele Strahlenbündel von der Strahlerzeugungsoptik ungestört durch die ebene, kreisrunde Strahleneintrittsfläche (42) in den Aufsatz (44) ein und wird an dessen verspiegelter Rückfläche (48) um einen durch die Neigung der Rückfläche (48) festgelegten Winkel in Richtung auf die Bildebene umgelenkt. Bei dem Austritt des Strahlenbündels aus dem Aufsatz (44) wirkt die runde Außenfläche (41) wie eine Zylinderlinse und fokussiert das Strahlenbündel in Richtung auf die Bildebene.

Indem man nun den Fokus des Strahlenbündels in einem Schnitt (quer zur Scanrichtung) etwas vor oder hinter die Bildebene legt, erhält man in der Bildebene das Profil eines elliptischen Spots. Dieser elliptische Spot hat seine kleine Achse in Scanrichtung und er hat relativ zu dieser Scanrichtung eine feste Orientierung. In der zur Scanrichtung senkrecht in der Bildebene stehenden Richtung wird das Strahlenbündel durch den Aufsatz (44) nicht fokussiert, sodaß die Länge der großen Achse der Spotellipse in der Bildebene durch die Strahlgeometrie des von der Strahlerzeugungsoptik kommenden Strahlenbündels festgelegt wird. Damit legt bereits die Strahlerzeugungsoptik eine der beiden Achsen des elliptischen Spots fest. Das Verhältnis der großen zur kleinen Achse der Spotellipse wird durch folgende Parameter festgelegt:

- Brechzahl des Aufsatzes (44);
- Radius der runden Strahlenaustrittsfläche (41);
- verwendeter Spektralbereich des Strahlenbündels;
- Entfernung zwischen Hauptebene der Strahlenaustrittsfläche (41) und Bildebene; und
- Strahlgeometrie des von der Strahlerzeugungsoptik kommenden Strahlenbündels.

Anstelle der Rückfläche (48) des Aufsatzes (44) kann auch die Vorderfläche (49) des Trägerteils (43) verspiegelt werden, da beide Flächen (48, 49) plan sind. Dann müssen Aufsatz (44) und Trägerteil (43) allerdings durch eine Kittschicht anstelle einer Klebeschicht (45) miteinander verbunden werden. Dies gilt auch für die weiteren Umlenkvorrichtungen in den Fig. 5 - 7.

Der in Fig. 5 und 5a dargestellte Aufsatz (54) unterscheidet sich von dem in Fig. 4 dargestellten Aufsatz (44) dadurch, daß seine Strahleneintrittsfläche (52) eine optische Wirkung hat. Dadurch erreicht man, daß die Strahlgeometrie hinter der aus Aufsatz (54) und Trägerteil (53) bestehenden Umlenkvorrichtung nicht von der fokussierenden Wirkung der Strahlerzeugungsoptik auf das Strahlenbündel abhängig gemacht werden muß. Außerdem kann man die Größe des Spots in beiden Hauptachsen auch bei einem achsenparallelen Strahlenbündel durch die Strahleneintrittsfläche (52) (unter Berücksichtigung der anderen Parameter) festlegen.

Der Aufsatz (54) und das Trägerteil (53) bestehen aus zwei durch eine Klebeschicht (55) verbundenen, schräg abgeschnittenen Kreiszylindern gleichen Durchmessers, deren Zylinderachsen mit der optischen Achse (56) und der Drehachse (57) der Umlenkvorrichtung zusammenfallen. Die Rückfläche (58) des Aufsatzes (54) ist verspiegelt.

Während bei dieser Umlenkvorrichtung die Strahlenaustrittsfläche (51) des Aufsatzes (54) immer eine zylinderoptische Wirkung hat, ist man bei der Wahl der optischen Wirkung der Strahleneintrittsfläche (52) frei. Die optische Wirkung der Strahleneintrittsfläche (52) kann daher sphärisch, torisch oder zylindrisch sein. Vorteilhafterweise wird man sie aber so gestalten, daß sie zumindest auch eine fokussierende Wirkung für das von der Strahlerzeugungsoptik kommende Strahlenbündel in der zur zylindrischen Strahlenaustrittsfläche (51) senkrechten Richtung hat. Auch die optische Wirkung durch die Strahleneintrittsfläche (52) hat eine feste räumliche Orientierung relativ zur Scanrichtung in der Bildebene. Die Strahleneintrittsfläche (52) mit optischer Wirkung gibt zusätzliche Parameter für die Optimierung des optischen Systems, ohne daß die in Fig. 4 erzielten Vorteile hinsichtlich der Minimierung der Unwucht verloren gehen.

In der Fig. 6 und 6a ist der Freiraum für die optimale optische Auslegung der Umlenkvorrichtung dadurch gegenüber der Umlenkvorrichtung in Fig. 5 erhöht worden, daß nun der Umfang (69) des Trägerteils (63) nicht mehr maßgeblich ist für den Radius der Strahlenaustrittsfläche (61). Das hat allerdings den Nachteil, daß die Variation des Radius der Strahlenaustrittsfläche (61) zu einer minimalen Unwucht führt. Ansonsten stimmt diese Vorrichtung (bei welcher der Aufsatz (64) mit einer Klebeschicht (65) auf dem __ Trägerteil (63) so befestigt ist, daß die optische Achse (66) mit der Drehachse (67) zusammenfällt) mit der Vorrichtung aus Fig. 5 überein, da auch die Strahleneintrittsfläche (62) eine optische Wirkung hat und die Rückfläche (68) des Aufsatzes (64) verspiegelt ist.

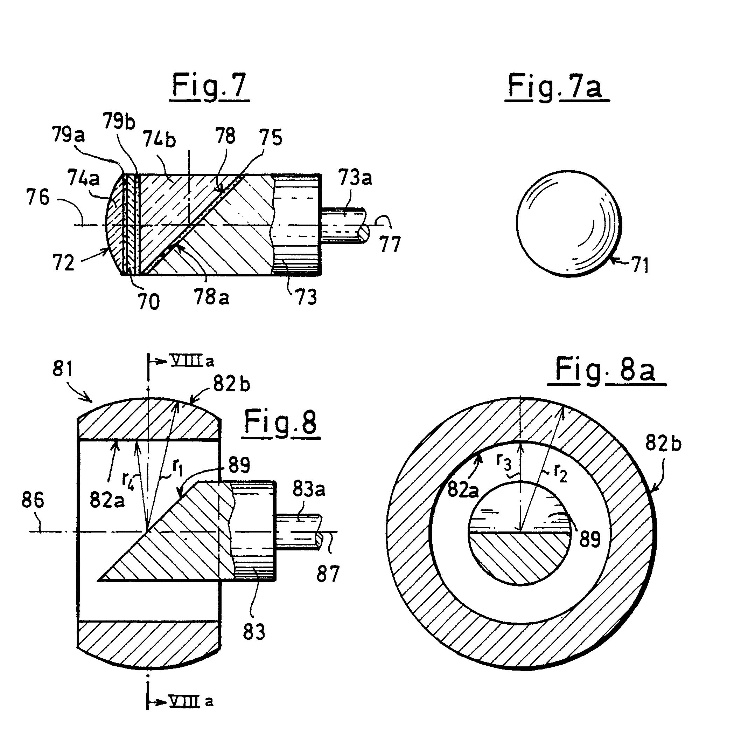

Bei der in Fig. 7 und 7a dargestellten Umlenkvorrichtung erreicht man eine weitere Erhöhung des Freiraumes für die optische Auslegung dadurch, daß zwischen einem Aufsatz (74a) mit der Strahleneintrittsfläche (72) und einen mit einer Klebeschicht (75) an dem Trägerteil (73) befestigten Aufsatz (74b) mit der Strahlenaustrittsfläche (71) ein Zwischenstück (70) mit zwei Kittschichten (79a und 79b) angebracht ist. Dieses Zwischenstück (70) kann zusätzlich eine optische Wirkung auf das von der Strahlerzeugungsoptik kommende Strahlenbündel haben. Die spiegelnde Rückfläche (78) des Aufsatzes (74b) ist bei dieser Umlenkvorrichtung eben. Die optische Wirkung des Zwischenstücks (70) ist ein weiterer Freiraum bei der optischen Auslegung der Vorrichtung und kann z.B. darin bestehen, daß das Zwischenstück (70) ein Filter ist, dessen filternde Wirkung einen rotationssymmetrischen Verlauf hat.

Insgesamt ist auch diese Vorrichtung so ausgerichtet, daß die optische Achse (76) mit der Drehachse (77) zusammenfällt. Da die Strahlenaustrittsfläche (71) einen Radius hat, welcher mit dem Radius der Aufsätze (74a, 74b), des Zwischenstücks (70) und des Trägerteils (73) übereinstimmt, treten bei dieser Vorrichtung keine Unwuchtprobleme auf.

Das in Fig. 7 beschriebene Zwischenstück (70) kann in allen Umlenkvorrichtunen mit transparentem Aufsatz verwendet werden. Bei derartigen Umlenkvorrichtungen ist es vorteilhaft, wenn das Trägerteil und der transparente Aufsatz ein zumindest annähernd gleiches spezifisches Gewicht besitzen.

Um Strahlungsverluste und Reflexe an der Strahleneintrittsfläche und an der Strahlenaustrittsfläche des Aufsatzes zu minimieren, kann auf diese Flächen eine Entspiegelungsschicht aufgebracht werden.

Je nach Funktionsweise des Scanners kann die in Fig. 1 beschriebene Strahlerzeugungsoptik ein angepaßtes Strahlenbündel vor der Umlenkvorrichtung erzeugen. Dabei ist es wesentlich, ob nach einem Scanvorgang entlang des Umfangs der Vorlage in der Bildebene die Umlenkvorrichtung oder die Vorlage entlang der optischen Achse verschoben wird, um eine zur vorherigen Scanlinie parallele Scanlinie abzuscannen. Wird die Umlenkvorrichtung entlang der optischen Achse bewegt, so ist es vorteilhaft, wenn die Strahlerzeugungsoptik ein zur optischen Achse achsparalleles Strahlenbündel vor der Umlenkvorrichtung erzeugt. Dadurch wird die Umlenkung unempfindlicher gegen Störungen (z.B. Vibration) längs der optischen Achse. Außerdem kann die Umlenkvorrichtung ohne Lichtquelle und Strahlerzeugungsoptik bewegt werden. Deshalb ist dieser Strahlengang auch in Fig. 1 dargestellt.

Wird hingegen nach jedem Scanvorgang die Vorlage in ihre neue Position bewegt und hat man einen festen Abstand zwischen Strahlerzeugungsoptik und Umlenkvorrichtung, so kann das Strahlenbündel eine konvergente oder divergente Strahlgeometrie besitzen, solange die Strahlgeoemetrie in jedem Punkt entlang der optischen Achse bis zur Umlenkvorrichtung einen kreisförmigen Durchmesser in der Ebene senkrecht zur optischen Achse hat und man durch die optischen Flächen der Umlenkvorrichtung der Strahlenbündel fokussieren kann.

Bei der in Fig. 8 und Fig. 8a dargestellten Umlenkvorrichtung handelt es sich um ein drehbares Trägerteil (83) mit einer verspiegelten schrägen Vorderfläche (89). Bei der Rotation dreht sich die Antriebsachse (83a) des Trägerteils (83) mit ihrer Drehachse (87) in der optischen Achse (86) der Strahlerzeugungsoptik. Um dieses Trägerteil (83) herum ist ein kreisförmiges Linsenelement (81) angeordnet, dessen Zylinderachse mit der optischen Achse (86) zusammenfällt.

Das Linsenelement (81) hat zwei optisch wirksame Flächen (82a und 82b), deren Radien entsprechend den optischen Gegebenheiten im Scanner ausgewählt werden können. Als Parameter zur Strahlumformung durch das Linsenelement (81) kann man bezüglich des Linsenelementes (81) folgende Größen verwenden:

- Brechzahl des Linsenmaterials;
- Dicke des Linsenelementes;
- Außenradius des Linsenelementes r1 (konstant oder variabel);
- Außenradius des Linsenelementes r2 (konstant);
- Innenradius des Linsenelementes r3 (konstant);
- Innenradius des Linsenelementes r4 (konstant oder variabel).

Mit der entsprechenden Dimensionierung dieser Parameter ist es möglich, auch mit dieser Umlenkvorrichtung ein elliptisches Spotbild auf der hier nicht dargestellten Bildebene zu erzeugen. Selbstverständlich kann auch hierbei die Strahlumformung durch eine asphärische Spiegeloberfläche oder durch einen transparenten Aufsatz unterstützt werden.

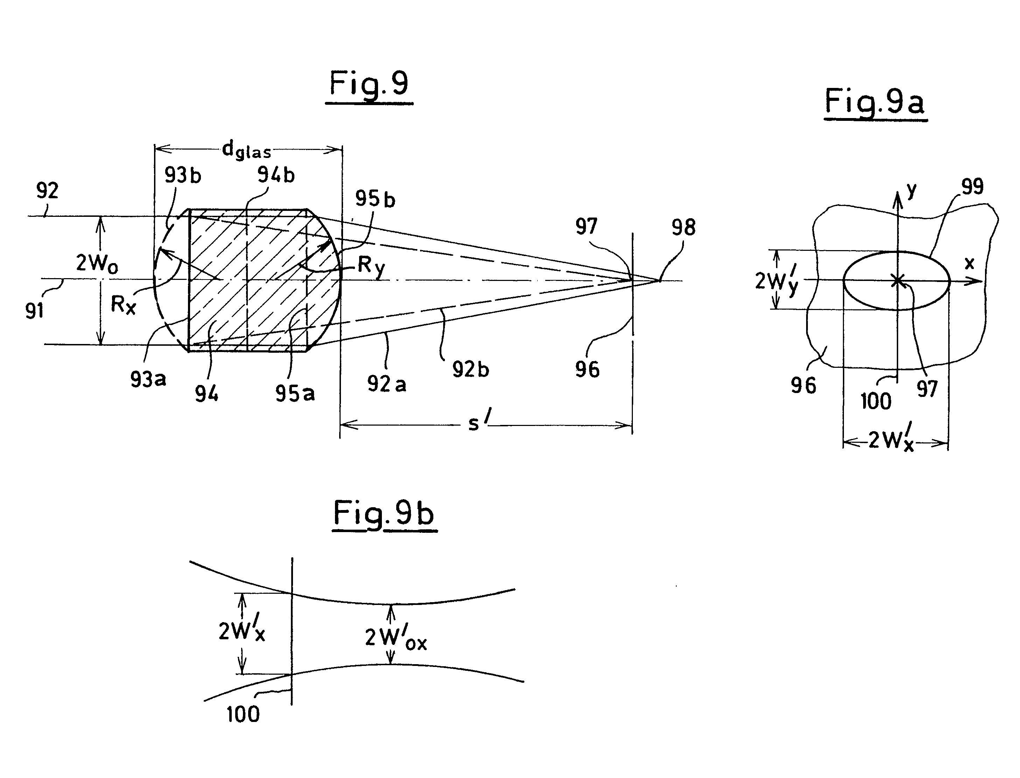

Anhand von Fig. 9 und 9a ist nun in einem beispielhaften Fall eine Umlenkvorrichtung durchgerechnet, wie sie in Fig. 5 dargestellt ist. Bei anderen Vorrichtungen, z.B. mit torischer oder zylindrischer Spiegeloberfläche muß die optische Wirkung dieser Spiegeloberfläche bei der Rechnung entsprechend berücksichtigt werden.

Zur besseren Anschaulichkeit bei der zeichnerischen Darstellung ist der Strahlengang entfaltet dargestellt. Dabei wird deutlich, daß die optische Wirkung des Aufatzes (94) der einer dicken Linse entspricht.

Das ankommende Strahlenbündel (92) ist parallel zur optischen Achse (91). Die Strahleneintrittsfläche ist zylindrisch, so daß sie in einer Ebene als plane Eintrittsfläche (93a) ohne optische Wirkung auf das eintreffende Strahlenbündel und in der anderen Ebene als brechende Strahleneintrittsfläche (93b) erscheint. Das führt dazu, daß das ankommende Strahlenbündel (92) in einer Richtung eine fokussierende Wirkung erfährt (hier als x-Richtung angenommen), während in der anderen Richtung (hier als y-Richtung angenommen) das Strahlenbündel (92) keine optische Wirkung erfährt. Nachdem das so "einseitig fokussierte" Strahlenbündel an der ebenen Rückseite (94b) des Aufsatzes gespiegelt wurde, kommt es an die Strahlenaustrittsfläche. Diese Fläche ist auch zylindrisch und in ihrer Wirkung senkrecht zur zylindrischen Strahleneintrittsfläche orientiert, so daß das Strahlenbündel in x-Richtung nun an der Austrittsfläche (95b) eine fokussierende Wirkung erfährt, während in y-Richtung an der Strahlenaustrittsfläche (95a) keine optische Wirkung auftritt. Durch diese Anordnung der beiden torischen Strahlenein- und -austrittsflächen kann der gewünschte elliptische Fokus (99) in der Bildebene (96) in jeder Achse diskret eingestellt werden.

In Fig. 9 ist die richtungsabhängige Fokussierung durch zwei unterschiedliche Randstrahlen (92a, 92b) sichtbar gemacht. In der x-Richtung sind die beiden Flächen (93b, 95a) und in der y-Richtung die beiden Flächen (93a, 95b) für die optische Betrachtung relevant und führen zu einem y-Fokus (97) auf der Bildebene (96), während der x-Fokus (98) sich hinter der Bildebene (96) befindet. Der elliptische Spot (99) hat eine gewünschte größere Achse quer zur Scanrichtung (100). Bei der Berechnung des Spotbildes in der Bildebene (96) ist bei der Berechnung zu berücksichtigen, daß der optische Weg in x- und y-Richtung für das ankommende Strahlenbündel (92) unterschiedlich lang ist und man mit Gauss-Bündeln rechnen muß.

Verwendet man einen Laserstrahl mit der Wellenllänge $\lambda$ = 488 nm (Argon-Laser), nimmt man einen Aufsatz (94), der für diese Wellenlänge eine Brechzahl n = 1,5 besitzt, und legt man den Abstand von der hinteren Hauptebene (95a) zur Bildebene (96) mit s' = 500 mm fest, so ergeben sich folgende Werte:

Eintrittsseite: $W_o$ = 17,4 mm
Konfokaler Parameter = 3,9 x $10^6$ mm
   Austrittsseite:
   y-Richtung (Scanrichtung)
   $F_y$ = 500 mm ($\hat{=}$ $R_y$ = 250 mm)
   Konfokaler Parameter = 0,26 mm
   $W_{oy}'$ = $W_y'$ = 4,5 $\mu$m (Halbachse) $\hat{=}$ $W_{Bildebene}$
   x-Richtung (quer zur Scanrichtung)
   $d_{glas}$ = 45 mm $\hat{=}$ $d_{opt}$ = 60 mm
   $F_2$ = 560,25 mm ($\hat{=}$ $R_x$ = 280,125 mm)
   Konfokaler Parameter = 0,32 mm
   $W_{ox}'$ = 5,0 $\mu$m
   $W_x'$ = 9,25 $\mu$m
Daraus folgt Spot in der Bildebene:

große Achse = 18,5 $\mu$m
kleine Achse = 9,0 $\mu$m

**Patentansprüche**

1. Verfahren zum punktweisen optischen Überstreichen einer Vorlage auf einer innenzylindrischen Bildebene mit einem durch eine drehbare Umlenkvorrichtung abgelenkten Strahlenbündel, dadurch gekennzeichnet, daß durch mindestens eine optische Fläche (12, 38, 41, 48, 51, 52, 58, 62, 68, 69, 71, 72, 78, 82a, 82b, 89) der Umlenkvorrichtung ein orientierter, vorzugsweise elliptischer Spot (20) auf der Bildebene (17, 96) erzeugt wird.

2. Verfahren nach Anspruch 1, dadurch gekennzeichnet, daß die große Halbachse des elliptischen Spots (20) quer zur Scanlinie orientiert wird.

3. Verfahren nach Anspruch 2, dadurch gekennzeichnet, daß der Betrag der Differenz der großen zur kleine Achse des elliptischen Spots (20) der Geschwindigkeit des Spots (20) auf der Bildebene (17, 96) multipliziert mit der Aktivzeit entspricht.

4. Vorrichtung zum punktweisen optischen Überstreichen einer Vorlage in einer innenzylindrischen Bildebene, bestehend aus einer Lichtquelle und einer ihr zugeordneten Strahlerzeugungsoptik zur Erzeugung eines Strahlenbündels um eine optische Achse mit rotationssymmetrischer Strahlgeometrie, sowie einer Umlenkvorrichtung mit mindestens einer spiegelnden Fläche zur Ablenkung des Strahlenbündels auf die Bildebene, wobei die Mittelachse der Bildebene, die optische Achse der Strahlerzeugungsoptik und die Drehachse der Umlenkvorrichtung zusammenfallen, dadurch gekennzeichnet, daß die Umlenkvorrichtung mindestens eine die Strahlgeometrie des von der Strahlerzeugungsoptik (1) kommenden Strahlenbündels (9) verändernden optischen Fläche (12, 38, 41, 48, 51, 52, 58, 62, 68, 69, 71, 72, 78, 82a, 82b, 89) zur Erzeugung einer unterschiedlichen Spotausdehnung in den beiden Hauptschnitten des Spots (20) in der Bildebene (17, 96) besitzt.

5. Vorrichtung nach Anspruch 4, dadurch gekennzeichnet, daß die optische Fläche (12, 38) asphärisch und verspiegelt.

6. Vorrichtung nach einem der Ansprüche 4 oder 5, dadurch gekennzeichnet, daß die Umlenkvorrichtung aus einem Trägerteil (33, 43, 53, 63, 73) und einem auf diesem befestigten Aufsatz (34, 44, 54, 64, 74) mit Strahlenein- und -austrittsfläche (31, 32, 41, 42, 51, 52, 62, 69, 71, 72) aufgebaut ist, wobei die verspiegelte optische Fläche (38, 48, 58, 68, 78) sich auf einer der beiden Kontaktflächen (38, 39, 48, 49, 58, 59, 68, 68a, 78, 78a) zwischen Trägerteil (33, 43, 53, 63, 73) und Aufsatz (34, 44, 54, 64, 74) befindet.

7.  Vorrichtung nach Anspruch 4, dadurch gekennzeichnet, daß die Umlenkvorrichtung aus einem rotierenden Trägerteil (83) mit verspiegelter Vorderfläche (89) und einem ringförmigen Linsenelement (81) um die optische Achse (86) im Bereich dieser Vorderfläche (89) besteht, wobei das Linsenelement (81) durch mindestens eine asphärische Oberfläche (82a, 82b) das von der Vorderfläche (89) kommende Strahlenbündel im Querschnitt verändert.

8.  Vorrichtung nach Anspruch 5, dadurch gekennzeichnet, daß die spiegelnde Fläche (12, 38) auch zur Veränderung der Strahlgeometrie des Strahlenbündels (9) ausgebildet ist.

9.  Vorrichtung nach Anspruch 5, 7 oder 8, dadurch gekennzeichnet, daß auf dem rotierenden Trägerteil (33) ein Aufsatz (34) angebracht ist, wobei sich die spiegelnde Fläche (38, 89) auf einer der beiden Kontaktflächen (38, 39) zwischen dem Trägerteil (33) und dem Aufsatz (34) befindet.

10.  Vorrichtung nach Anspruch 6, dadurch gekennzeichnet, daß die beiden Kontaktflächen (38, 39, 48, 49, 58, 59, 68, 68a, 78, 78a) zwischen Trägerteil (33, 43, 53, 63, 73) und Aufsatz (34, 44, 54, 64, 74) schräg und plan sind und eine dieser Kontaktflächen (38, 39, 48, 49, 58, 59, 68, 68a, 78, 78a) verspiegelt ist und mindestens eine der beiden Strahlenein- und -austrittsflächen (31, 32, 41, 42, 51, 52, 62, 69, 71, 72) des Aufsatz ( 34, 44, 54, 64, 74) eine asphärische optische Fläche besitzt.

11.  Vorrichtung nach einem der Ansprüche 6, 8, 9 oder 10, dadurch gekennzeichnet, daß zwischen der Strahleneintrittsfläche (72) und der verspiegelten optischen Fläche (78) ein diskretes transparentes Zwischenstück (70) mit einer optischen Wirkung eingekittet ist.

Fig.1

Fig.2

## Fig. 3

34 38 39
36
33a
32
35 30a 33
37

## Fig. 3a

31
30

## Fig. 4

44 48 49
46
43a
42
45 43
47

## Fig. 4a

41

## Fig. 5

54 58 59
56
53a
52
55 53
57

## Fig. 5a

51

## Fig. 6

61 68
64
66
63a
62 65 68a 63
67

## Fig. 6a

61
69

## Fig.7

## Fig.7a

## Fig.8

## Fig.8a

11

## Fig.9

## Fig.9a

## Fig.9b

EP 0 456 110 A2